# EUROPÄISCHE PATENTANMELDUNG

(11) **EP 2 503 271 A2**
(43) Veröffentlichungstag der Anmeldung: **26.09.2012**
(21) Anmeldenummer: 12001383.4
(22) Anmeldetag: 01.03.2012
(51) Int. Cl.: F25J 3/06

(54) **Verfahren und Vorrichtung zur Behandlung eines kohlendioxidhaltigen Gasstroms**

(30) Priorität: 22.03.2011 DE 102011014678
(71) Anmelder: Linde Aktiengesellschaft, 80331 München (DE)
(72) Erfinder: Ritter, Roland. Dr, 01217 Dresden (DE); Spenner, Dirk, 01723 Kesselsdorf (DE)

(57) **Zusammenfassung**

Die Erfindung betrifft ein Verfahren und eine Vorrichtung zur Behandlung eines kohlendioxidhaltigen Gasstroms, insbesondere aus einer Großfeuerungsanlage, z.B. aus einem Kraftwerk. Der vorverdichtete Gasstrom (1) wird in einer kryogenen Kohlendioxidreinigungsstufe (2, 3, 4) partiell verflüssigt. Die Flüssigkeit wird anschließend abgetrennt. Aus der abgetrennten Flüssigkeit wird durch Wiederverdampfen ein Gasstrom mit erhöhtem Kohlendioxidgehalt (Kohlendioxidgasstrom) (7) gewonnen. Aus dem nicht verflüssigten Rohgas wird ein Gasstrom mit vermindertem Kohlendioxidgehalt (Ventgasstrom) gebildet. Der Ventgasstrom wird in mindestens einer Expansionsturbine (5, 6) entspannt und die dabei erzeugte Kälte wird zur Kühlung des Rohgasstroms rückgewonnen. Der Kohlendioxidgasstrom wird auf einen Enddruck verdichtet (8) und einer Weiterverwertung und/oder Lagerung zugeführt. Insbesondere kann durch Verpressung des Kohlendioxids im Untergrund die Emission klimaschädlicher Gase vermindert werden. Zur Verbesserung der Energieeffizienz wird vorgeschlagen, dass aus einem Teil der in der kryogenen Kohlendioxidreinigungsstufe abgetrennten Flüssigkeit ein Flüssigstrom mit erhöhtem Kohlendioxidgehalt (Kohlendioxidflüssigstrom) gewonnen wird, der in flüssiger Phase (9) einer Weiterverwertung und/oder Lagerung (10) zugeführt wird.

## Beschreibung

Die Erfindung betrifft ein Verfahren zur Behandlung eines kohlendioxidhaltigen Gasstroms (Rohgasstroms), insbesondere einer Großfeuerungsanlage, wobei der vorverdichtete Rohgasstrom in einer kryogenen Kohlendioxidreinigungsstufe partiell verflüssigt wird, die Flüssigkeit abgetrennt wird und daraus durch Wiederverdampfen ein Gasstrom mit erhöhtem Kohlendioxidgehalt (Kohlendioxidgasstrom) gewonnen wird, während aus dem nicht verflüssigten Rohgas ein Gasstrom mit vermindertem Kohlendioxidgehalt (Ventgasstrom) gewonnen wird, der Ventgasstrom in mindestens einer Expansionsturbine entspannt wird, und die dabei erzeugte Kälte zur Kühlung des Rohgasstroms rückgewonnen wird, und der Kohlendioxidgasstrom auf einen Enddruck verdichtet und einer Weiterverwertung und/oder Lagerung zugeführt wird, sowie eine Vorrichtung zur Durchführung des Verfahrens.

Kohlendioxidhaltige Gasströme fallen bei allen Großfeuerungsanlagen an, die mit fossilen Brennstoffen wie Kohle, Erdöl oder Erdgas betrieben werden. Hierzu zählen insbesondere Kraftwerke, aber auch Industrieöfen, Dampfkessel und ähnliche thermische Großanlagen zur Strom- und/oder Wärmeerzeugung. Darüberhinaus entstehen kohlendioxidhaltige Gasströme auch bei Prozessanlagen der chemischen oder petrochemischen Industrie, wie z.B. bei Spaltöfen von Olefinanlagen oder bei Dampfreformern von Synthesegasanlagen. Aufgrund der klimaschädlichen Wirkung von Kohlendioxidgas wird nach Lösungen gesucht, um die Emissionen von kohlendioxidhaltigen Abgasen an die Atmosphäre zu vermindern.

In jüngster Zeit werden neue Kraftwerkskonzepte vorgeschlagen, bei denen der fossile Brennstoff, z.B. Kohle, mit einem sauerstoffreichen Verbrennungsgas, insbesondere mit technisch reinem Sauerstoff oder mit sauerstoffangereicherter Luft, verbrannt wird (Sauerstoffbrenngasverfahren). Der Sauerstoffanteil dieses Verbrennungsgases beträgt z.B. 95 bis 99,9 Vol.-%. Das dabei entstehende Abgas, das auch als Rauchgas bezeichnet wird, enthält hauptsächlich Kohlendioxid (CO2) mit einem Anteil von ca. 70 bis 85 Vol.-%. Ziel dieser neuen Konzepte ist es, das bei der Verbrennung der fossilen Brennstoffe entstehende und im Rauchgas konzentriert vorhandene Kohlendioxid in geeigneten Lagerstätten, insbesondere in bestimmten Gesteinsschichten oder salzwasserführenden Schichten, zu verpressen und somit den Kohlendioxidausstoß zur Atmosphäre zu begrenzen. Dadurch soll die klimaschädliche Wirkung von Treibhausgasen wie Kohlendioxid reduziert werden. Derartige Kraftwerke werden in der Fachwelt als so genannte "Oxyfuel"-Kraftwerke bezeichnet.

Bei den bisher bekannten Konzepten erfolgen in aufeinander folgenden Schritten eine Entstaubung, Entstickung und Entschwefelung des Rauchgases. Im Anschluss an diese Rauchgasreinigung wird das so aufbereitete, kohlendioxidreiche Abgas verdichtet und einer Kohlendioxidreinigungsstufe zugeführt. Dort werden typischerweise durch ein kryogenes Trennverfahren ein Teilgasstrom mit vermindertem Kohlendioxidgehalt und ein anderer Teilgasstrom mit erhöhtem Kohlendioxidgehalt erzeugt. Der Teilgasstrom mit erhöhtem Kohlendioxidgehalt stellt den gewünschten Kohlendioxidproduktstrom dar, der mit einem Kohlendioxidgehalt von z.B. mehr als 95 Vol.-% anfällt und zur weiteren Nutzung, insbesondere zum Transport zu Lagerungsstätten, vorgesehen ist. Der Teilgasstrom mit vermindertem Kohlendioxidgehalt fällt als Nebenstrom (so genanntes Ventgas) bei 15 bis 30 bar, vorzugsweise 18 bis 25 bar, an und enthält überwiegend die nicht zur Verpressung vorgesehenen Bestandteile, insbesondere Inertgase wie Stickstoff (N2) und Argon (Ar) sowie Sauerstoff (02). In diesem Teilgasstrom sind aber auch noch Anteile an Kohlendioxid in einer Konzentration von ca. 25 bis 35 Vol.-% vorhanden. Dieses Ventgas wird gegenwärtig zur Atmosphäre abgeblasen.

Üblicherweise wird der Rohgasstrom in vorgeschalteten Anlagenteilen auf Druck vorverdichtet und z.B. in Adsorberstationen getrocknet. Das bedeutet, dass auch das Ventgas zunächst noch im verdichteten Zustand vorliegt. Gegenwärtig wird dieses Druckniveau über Entspannungsventile abgebaut.

In der EP 1952874 A1 und der EP 1953486 A1 (Air Products) ist bereits vorgeschlagen worden, nach Anwärmung des Ventgases und weiterer Aufheizung mittels Abwärme aus der Verdichtung eine Turbinenentspannung des Ventgasstroms durchzuführen. Eine Nutzung der bei der Turbinenentspannung freiwerdenden Energie, insbesondere der beim Entspannungsvorgang anfallenden Kälteleistung, ist hierbei jedoch nicht vorgesehen.

In der DE 102009039898 A1 (Linde) wird zur Verbesserung der Energieeffizienz vorgeschlagen, dass der Ventgasstrom in mindestens einer Expansionsturbine entspannt wird und sowohl die dabei anfallende kinetische Energie als auch die dabei erzeugte Kälte zur Energierückgewinnung genutzt werden. Zur Nutzung der kinetischen Energie kann die Expansionsturbine mit einem Verdichter (Booster) gekoppelt sein, der den Rohgasstrom und/oder den Kohlendioxidgasstrom verdichtet. Zur Nutzung der bei der Entspannung erzeugten Kälte kann der zumindest teilweise entspannte Ventgasstrom in Wärmetausch mit abzukühlenden Prozessströmen, z.B. dem Rohgasstrom und/oder dem Kohlendioxidgasstrom, gebracht werden.

Der Kohlendioxidgasstrom wird üblicherweise auf den notwendigen Enddruck von über 80 bar (bevorzugt 120 bis 150 bar) für den Transport und die anschließende Sequestrierung mittels eines Endverdichters verdichtet.

Alternativ zur Kohlendioxidgasstrom-Verdichtung ist auch eine Verflüssigung des abgetrennten kohlendioxidreichen Gases mit anschließender Druckerhöhung mittels Pumpen möglich. Allerdings wird hier der Einsatz eines Kältemittels notwendig. Bei Verwendung von Fremdkälte aus einer Kälteanlage liegt bereits nach der kryogenen Abtrennung ein flüssiges Kohlendioxidreinprodukt vor, welches auf den notwendigen Enddruck mittels einer Pumpe gebracht werden kann. Der Einsatz einer Kälteanlage (Fremdkälte) erhöht aber den notwendigen Energieverbrauch.

Der vorliegenden Erfindung liegt die Aufgabe zugrunde, ein Verfahren der eingangs genannten Art sowie eine Vorrichtung zur Durchführung des Verfahrens so auszugestalten, dass die Energieeffizienz weiter verbessert werden kann.

Diese Aufgabe wird verfahrensseitig dadurch gelöst, dass aus einem Teil der in der kryogenen Kohlendioxidreinigungsstufe abgetrennten Flüssigkeit ein Flüssigstrom mit erhöhtem Kohlendioxidgehalt (Kohlendioxidflüssigstrom) gewonnen wird, der in flüssiger Phase einer Weiterverwertung und/oder Lagerung zugeführt wird.

Mit der Erfindung wird ein energieschonender Betrieb der Kohlendioxidreinigungsstufe ohne Einsatz von Fremdkälte aus einer externen Kälteanlage ermöglicht. Die zur Abkühlung und partiellen Kondensation des Rohgasstroms notwendige Kälte kann durch Wärmetausch mit der den Kohlendioxidgasstrom bildenden, verdampfenden Flüssigkeit sowie durch Wärmetausch mit dem durch Entspannung in der Expansionsturbine abgekühlten Ventgasstrom bereitgestellt werden. Durch Abzweigung eines Kohlendioxidflüssigstroms kann die Endverdichtung des Kohlendioxidgasstroms entlastet werden, wodurch insgesamt eine Verbesserung der Energieeffizienz erreicht wird. Darüber hinaus kann auf diese Weise ein zusätzliches, flüssiges Kohlendioxidprodukt ohne weitere Energieaufwendungen zur Verfügung gestellt werden.

Dabei hat sich herausgestellt, dass ein Betrieb der Kohlendioxidreinigungsstufe ohne externe Kälteanlage zweckmäßig ist, wenn der Kohlendioxidflüssigstrom aus 5 bis 25 %, vorzugsweise 10 bis 15 %, der in der kryogenen Kohlendioxidreinigungsstufe abgetrennten Flüssigkeit gewonnen wird.

Gemäß einer besonders vorteilhaften Ausgestaltung der Erfindung wird der Kohlendioxidflüssigstrom dem Kohlendioxidgasstrom nach dessen Verdichtung auf den Enddruck zugeführt. Dabei wird der Kohlendioxidflüssigstrom vor seiner Zuführung zum Kohlendioxidgasstrom zweckmäßigerweise mittels einer Flüssigpumpe auf den Enddruck verdichtet.

Eine andere Variante der Erfindung sieht vor, dass der Kohlendioxidflüssigstrom in einem Flüssiggastank zur weiteren Verwendung, insbesondere in der Lebensmittelindustrie, zwischengespeichert wird. Dadurch können Kundenwünsche nach einem zusätzlichen, flüssigen Kohlendioxidprodukt ohne zusätzliche Energieaufwendungen und ohne den Einsatz einer externen Kälteanlage erfüllt werden.

Eine weitere Verwendungsmöglichkeit besteht im Einsatz des Kohlendioxidflüssigstroms nach Verdampfung als Transportmedium für den pneumatischen Transport oder als Schleusengas von Einsatzstoffen, insbesondere Kohlenstaub, in Großfeuerungsanlagen.

Zur Nutzung der kinetischen Energie kann die Expansionsturbine auch mit mindestens einem Verdichter (Booster) gekoppelt werden, so dass die Expansionsturbine bei der zumindest teilweisen Entspannung des Ventgasstroms den Rohgasstrom und/oder den Kohlendioxidproduktstrom verdichtet. Zur Nutzung der bei der Entspannung erzeugten Kälte wird der zumindest teilweise entspannte Ventgasstrom vorzugsweise in Wärmetausch mit abzukühlenden Prozessströmen, z.B. dem Rohgasstrom/und oder dem Kohlendioxidproduktstrom, gebracht. Durch die Entspannung des Ventgases kann prozessintern Kälteleistung bereitgestellt werden und damit Fremdkälte eingespart werden.

Die Erfindung betrifft ferner eine Vorrichtung zur Behandlung eines kohlendioxidhaltigen Gasstroms (Rohgasstroms), insbesondere aus einer Großfeuerungsanlage, mit einer mit dem vorverdichteten Rohgasstrom beschickten Kohlendioxidreinigungseinrichtung, die eine Ableitung für einen Gasstrom mit erhöhtem Kohlendioxidgehalt (Kohlendioxidgasstrom) und eine Ableitung für einen Gasstrom mit vermindertem Kohlendioxidgehalt (Ventgasstrom) aufweist, wobei die Ableitung für den Kohlendioxidgasstrom über einen Endverdichter mit einer Verwertungseinrichtung und/oder Lagerungsstätte in Verbindung steht, während die Ableitung für den Ventgasstrom mit mindestens einer Expansionsturbine in Verbindung steht, die eine Ableitung für den zumindest teilweise entspannten Ventgasstrom aufweist, die mit einer Wärmeübertragungseinrichtung verbunden ist, welche mit dem vorverdichteten Rohgasstrom, dem Kohlendioxidgasstrom und dem Ventgasstrom beschickbar ist.

Vorrichtungsseitig wird die gestellte Aufgabe dadurch gelöst, dass die Kohlendioxidreinigungseinrichtung außerdem eine Ableitung für einen Flüssigstrom mit erhöhtem Kohlendioxidgehalt (Kohlendioxidflüssigstrom) aufweist, die unter Umgehung der Wärmeübertragungseinrichtung und des Endverdichters direkt mit einer Verwertungseinrichtung und/oder Speichereinrichtung für Flüssigkeit mit erhöhtem Kohlendioxidgehalt in Verbindung steht.

Bevorzugt weist die Ableitung für den Kohlendioxidflüssigstrom eine Flüssigpumpe auf und mündet nach dem Endverdichter in die Ableitung für den Kohlendioxidgasstrom.

Die Erfindung eignet sich für alle denkbaren Großfeuerungsanlagen, bei denen kohlendioxidhaltige Gasströme anfallen. Hierzu zählen z.B. mit fossilen Brennstoffen betriebene Kraftwerke, Industrieöfen, Dampfkessel und ähnliche thermische Großanlagen zur Strom- und/oder Wärmeerzeugung. Mit besonderem Vorteil kann die Erfindung bei Großfeuerungsanlagen eingesetzt werden, die mit technisch reinem Sauerstoff oder sauerstoffangereicherter Luft als Brenngas versorgt werden und bei denen demzufolge Abgasströme mit hohen Kohlendioxidkonzentrationen anfallen. Insbesondere eignet sich die Erfindung für so genannte CO2-arme Kohlekraftwerke, die mit Sauerstoff als Brenngas betrieben werden ("Oxyfuel"-Kraftwerke) und bei denen das im Abgas in hoher Konzentration enthaltene Kohlendioxid abgetrennt und im Untergrund verpresst wird ("CO2-Capture-Technology").

Mit der Erfindung ist eine ganze Reihe von Vorteilen verbunden:

Der Endverdichter für den Kohlendioxidgasstrom wird entlastet, was zur Energieeinsparung und auch zur Verringerung von Investitionskosten führt. Außerdem wird der Energiehaushalt an der Wärmetauscheinrichtung optimal genutzt. Unter Umständen kann die Eintrittstemperatur am Endverdichter so eingestellt werden, dass einfachere Werkstoffe (keine hochlegierten Stähle) eingesetzt werden können. Darüber hinaus kann ein vorgereinigtes, flüssiges Kohlendioxidprodukt aus dem System bereitgestellt werden, welches zum Beispiel für die Aufbereitung zu lebensmittel-spezifischem Kohlendioxidprodukt (externe Nutzung) oder aber auch als Flüssigspeicher in einem Tanksystem genutzt werden kann.

Der Kohlendioxidflüssigstrom kann auch noch für andere Verwendungen eingesetzt werden (z.B. Aufbereitung zu gereinigtem Dichtgas für den Oxyfuelprozess, Einsatz als Transportmedium für den pneumatischen Transport von Kohlenstaub im Oxyfuelprozess, Speicherung von Kohlendioxidflüssigkeit zur Verwendung als Anfahrgas bzw. Füllgas nach der Verdampfung).

Bei mehrstufiger Verdichtung des Kohlendioxidgasstroms auf den geforderten Enddruck kann der Kohlendioxidflüssigstrom nach einer überkritischen Verdichtung des Kohlendioxidgasstroms (>72 bar) vor der Saugseite der nächst folgenden Verdichterstufe (oder Pumpe) (im überkritschen Zustand) zugeführt werden. Dadurch sinkt die Temperatur und die Dichte erhöht sich. Durch die höhere Dichte sinkt der Energiebedarf der nachfolgenden Verdichterstufen/ Pumpen zum Erreichen des geforderten Enddruckes.

Die Erfindung sowie weitere Ausgestaltungen der Erfindung werden im Folgenden anhand von in den Figuren schematisch dargestellten Ausführungsbeispielen im Vergleich zum bisherigen Stand der Technik näher erläutert.

Es zeigen:
- Figur 1: ein Blockschaltbild einer Kohlendioxidbehandlungsanlage mit Entspannung des Ventgases über eine Expansionsturbine nach dem Stand der Technik gemäß der EP 1952874 A1
- Figur 2: ein Blockschaltbild einer Kohlendioxidbehandlungsanlage mit Entspannung des Ventgases über Expansionsturbinen mit Energierückgewinnung nach dem Stand der Technik gemäß der DE 102009039898 A1
- Figur 3: ein Blockschaltbild einer Kohlendioxidbehandlungsanlage mit Abführung eines separaten Kohlendioxidflüssigstroms mit anschließender Verdichtung mittels einer Flüssigpumpe auf den geforderten Enddruck für den Pipelinetransport
- Figur 4: ein Blockschaltbild einer Kohlendioxidbehandlungsanlage mit Abführung eines separaten Kohlendioxidflüssigstroms mit anschließender Zwischenspeicherung zur externen Verwendung

In den Figuren sind jeweils dieselben Anlagenteile mit denselben Bezugsziffern versehen.

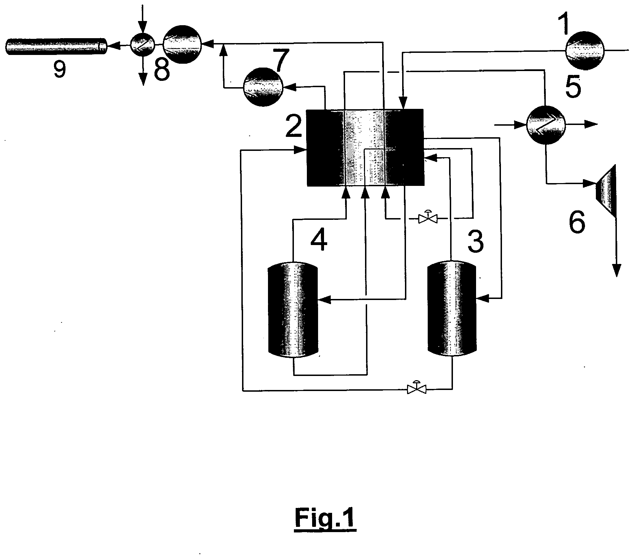

In Figur 1 ist eine herkömmliche Aufbereitung eines kohlendioxidhaltigen Rohgasstroms aus einem Kohlekraftwerk nach dem Stand der Technik gemäß der EP 1952874 A1 (Air Products) dargestellt. Der Rohgasstrom wird nach Verdichtung im Rohgasverdichter 1 über eine Wärmeübertragungseinheit 2 einem Primärabscheider 3 zur Abtrennung von Kohlendioxid zugeführt. Das Ventgas aus dem Primärabscheider 3 wird über die Wärmeübertragungseinheit 2 einem Sekundärabscheider 4 zugeführt. Der Kohlendioxidproduktstrom wird jeweils vom Boden der Kohlendioxidabscheider 3 und 4 abgezogen und über die zentrale Wärmeübertragungseinheit 2 (und im Falle des Ventgases vom Primärabscheider 3 zusätzlich über einen CO2-Produktverdichter 7) einer Endverdichtung 8 zugeführt, um schließlich über eine Rohrleitung (Kohlendioxid-Pipeline) 9 z.B. einer Verpressung im Untergrund zugeführt zu werden. Das Ventgas des Sekundärabscheiders 4 wird vom Kopf des Sekundärabscheiders 4 abgezogen, ebenfalls über die zentrale Wärmeübertragungseinheit 2 geleitet und schließlich nach einer weiteren Erwärmung im Wärmeübertrager 5 über eine Turbine 6 entspannt, um an die Atmosphäre abgegeben zu werden.

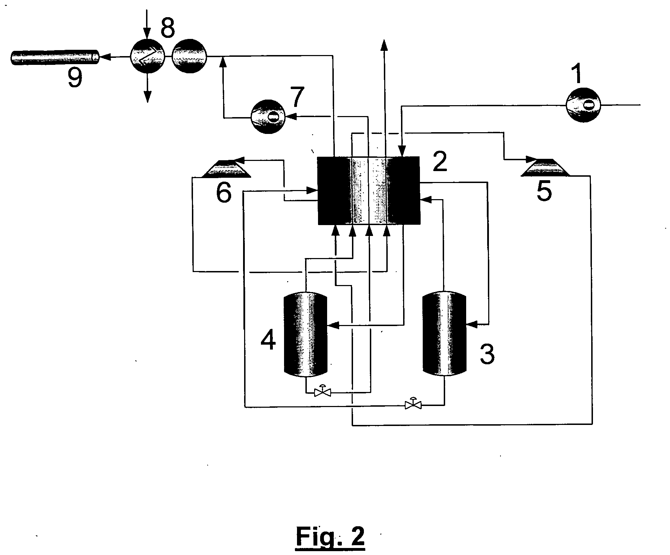

Im Gegensatz zu dem in Figur 1 gezeigten Verfahren zur Kohlendioxidaufbereitung bietet das in Figur 2 dargestellte Verfahren gemäß der DE 102009039898 A1 (Linde) den Vorteil der Energierückgewinnung bei der Entspannung des Ventgases. Bei diesem Verfahren sind wie bei der in Figur 1 gezeigten Verfahren zwei Kohlendioxidabscheider 3 und 4 sowie eine zentrale Wärmeübertragungseinheit 2 vorgesehen. Im Gegensatz zum Verfahren nach Figur 1 erfolgt jedoch keine bloße Entspannung des Ventgases über eine einzige Turbine, sondern eine stufenweise Entspannung über zwei Expansionsturbinen 5 und 6. Durch die stufenweise Entspannung des Ventgasstromes kann die Bildung von festem Kohlendioxid im Ventgas verhindert werden. Nach der Entspannung in der ersten Expansionsturbine 5 wird der Ventgasstrom in der zentralen Wärmeübertragungseinheit 2 angewärmt und dann in der zweiten Expansionsturbine 6 weiter bis nahe Atmosphärendruck entspannt und wiederum in der zentralen Wärmeübertragungseinheit 2 angewärmt. Damit kann das vorhandene Druckniveau des Ventgases vollständig ausgenutzt werden. Das nach der Entspannung kalte Ventgas wird in der zentralen Wärmeübertragungseinheit 2 gegen die abzukühlenden Prozessströme angewärmt. Damit stellt das Ventgas einen Teil der im Prozess notwendigen Kälteleistung bereit.

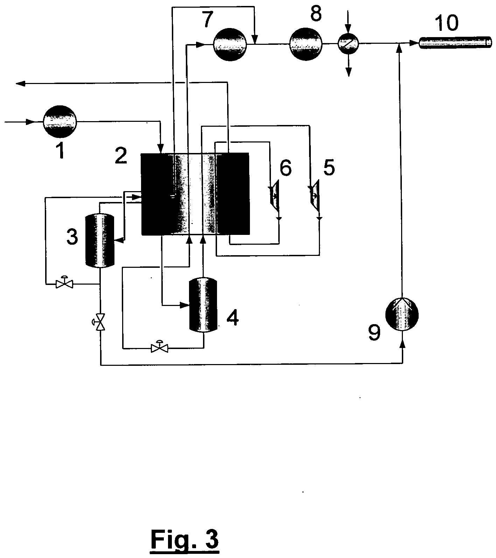

In Figur 3 ist eine Kohlendioxidaufbereitung nach der Erfindung gezeigt. Die Verfahrensführung unterscheidet sich von der in Figur 2 dargestellten dadurch, dass ein Teil des im Primärabscheider 3 abgetrennten, flüssigen Kohlendioxids abgezweigt und über eine Kohlendioxidflüssigpumpe 9 nach dem Endverdichter 8 der CO2-Pipeline 10 zugeführt wird. Dabei wird der Kohlendioxidflüssigstrom mittels der Kohlendioxidflüssigpumpe 9 auf den geforderten Enddruck für den Pipelinetransport gebracht. Wegen der Umgehung des Endverdichters 8 kann dieser entlastet werden, wodurch die Energieeffizienz erhöht wird und die Investitionskosten veringert werden können. Der Energiehaushalt an der Wärmeübertragungseinheit 2 kann optimal genutzt werden. Die Eintrittstemperatur am Endverdichter 8 kann so eingestellt werden, dass einfachere Werkstoffe (z.B. keine hochlegierten Stähle) eingesetzt werden können.

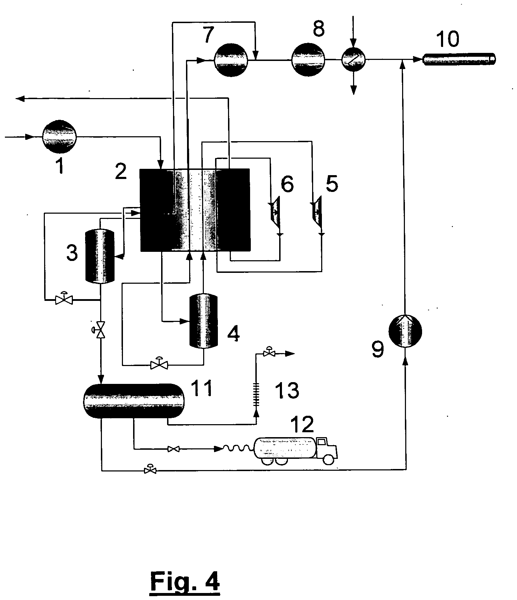

Bei der in Figur 4 gezeigten Variante der Erfindung wird das im Primärabscheider 3 abgetrennte, flüssige Kohlendioxid zunächst in einem Kohlendioxid-Flüssigtank 11 zwischengespeichert. Das flüssige Kohlendioxid kann je nach Bedarf über die Flüssigpumpe 9 der CO2-Pipeline 10 zugeführt werden und/oder in ein Transportfahrzeug 12 zur weiteren externen Nutzung (z.B. in der Lebensmittelindustrie) verladen werden und/oder in einem CO2-Verdampfer 13 verdampft und für eine interne Nutzung (z.B. als Anfahr- oder Fördergas) bereitgestellt werden.

## Patentansprüche

1. Verfahren zur Behandlung eines kohlendioxidhaltigen Gasstroms (Rohgasstroms), insbesondere einer Großfeuerungsanlage, wobei der vorverdichtete Rohgasstrom in einer kryogenen Kohlendioxidreinigungsstufe partiell verflüssigt wird, die Flüssigkeit abgetrennt wird und daraus durch Wiederverdampfen ein Gasstrom mit erhöhtem Kohlendioxidgehalt (Kohlendioxidgasstrom) gewonnen wird, während aus dem nicht verflüssigten Rohgas ein Gasstrom mit vermindertem Kohlendioxidgehalt (Ventgasstrom) gewonnen wird, der Ventgasstrom in mindestens einer Expansionsturbine entspannt wird und die dabei erzeugte Kälte zur Kühlung des Rohgasstroms rückgewonnen wird und der Kohlendioxidgasstrom auf einen Enddruck verdichtet und einer Weiterverwertung und/oder Lagerung zugeführt wird, **dadurch gekennzeichnet, dass** aus einem Teil der in der kryogenen Kohlendioxidreinigungsstufe abgetrennten Flüssigkeit ein Flüssigstrom mit erhöhtem Kohlendioxidgehalt (Kohlendioxidflüssigstrom) gewonnen wird, der in flüssiger Phase einer Weiterverwertung und/oder Lagerung zugeführt wird.

2. Verfahren nach Anspruch 1, **dadurch gekennzeichnet, dass** der Kohlendioxidflüssigstrom aus 5 bis 25 %, vorzugsweise 10 bis 15 %, der in der kryogenen Kohlendioxidreinigungsstufe abgetrennten Flüssigkeit gewonnen wird.

3. Verfahren nach Anspruch 1 oder 2, **dadurch gekennzeichnet, dass** der Kohlendioxidflüssigstrom dem Kohlendioxidgasstrom nach dessen Verdichtung auf den Enddruck zugeführt wird.

4. Verfahren nach Anspruch 3, **dadurch gekennzeichnet, dass** der Kohlendioxidflüssigstrom vor seiner Zuführung zum Kohlendioxidgasstrom mittels einer Flüssigpumpe auf den Enddruck verdichtet wird.

5. Verfahren nach einem der Ansprüche 1 bis 4, **dadurch gekennzeichnet, dass** der Kohlendioxidflüssigstrom in einem Flüssiggastank zur weiteren Verwendung, insbesondere in der Lebensmittelindustrie, zwischengespeichert wird.

6. Verfahren nach einem der Ansprüche 2 bis 5, **dadurch gekennzeichnet, dass** der Kohlendioxidflüssigstrom als Transportmedium für den pneumatischen Transport von Einsatzstoffen, insbesondere Kohlenstaub, in Großfeuerungsanlagen eingesetzt wird.

7. Vorrichtung zur Behandlung eines kohlendioxidhaltigen Gasstroms (Rohgasstroms), insbesondere aus einer Großfeuerungsanlage, mit einer mit dem vorverdichteten Rohgasstrom beschickten Kohlendioxidreinigungseinrichtung, die eine Ableitung für einen Gasstrom mit erhöhtem Kohlendioxidgehalt (Kohlendioxidgasstrom) und eine Ableitung für einen Gasstrom mit vermindertem Kohlendioxidgehalt (Ventgasstrom) aufweist, wobei die Ableitung für den Kohlendioxidgasstrom über einen Endverdichter mit einer Verwertungseinrichtung und/oder Lagerungsstätte in Verbindung steht, während die Ableitung für den Ventgasstrom mit mindestens einer Expansionsturbine in Verbindung steht, die eine Ableitung für den zumindest teilweise entspannten Ventgasstrom aufweist, die mit einer Wärmeübertragungseinrichtung verbunden ist, welche mit dem vorverdichteten Rohgasstrom, dem Kohlendioxidgasstrom und dem Ventgasstrom beschickbar ist, **dadurch gekennzeichnet, dass** die Kohlendioxidreinigungseinrichtung außerdem eine Ableitung für einen Flüssigstrom mit erhöhtem Kohlendioxidgehalt (Kohlendioxidflüssigstrom) aufweist, die unter Umgehung der Wärmeübertragungseinrichtung und des Endverdichters direkt mit einer Verwertungseinrichtung und/oder Speichereinrichtung für Flüssigkeit mit erhöhtem Kohlendioxidgehalt in Verbindung steht.

8. Vorrichtung nach Anspruch 7, **dadurch gekennzeichnet, dass** die Ableitung für den Kohlendioxidflüssigstrom eine Flüssigpumpe aufweist und nach dem Endverdichter in die Ableitung für den Kohlendioxidgasstrom mündet.
